# EUROPEAN PATENT APPLICATION

(11) **EP 4 799 833 A1**
(43) Date of publication of application: **02.09.2026**
(21) Application number: 26156905.7
(22) Date of filing: 06.02.2026
(51) Int. Cl.: B60H 1/00, B60W 50/08

(54) **VEHICLE MODE CONTROL DEVICE, VEHICLE MODE CONTROL METHOD, AND COMPUTER PROGRAM**

(30) Priority: 27.02.2025 JP 2025030647
(71) Applicant: Toyota Jidosha Kabushiki Kaisha, Toyota-shi, Aichi-ken 471-8571 (JP)
(72) Inventor: Someya, Makito, Toyota-shi, 471-8571 (JP)
(74) Representative: J A Kemp LLP

(57) **Abstract**

The vehicle mode control device for controlling a mode of a vehicle (1), includes a mode setting part (34) configured to set the mode of the vehicle (1) to a state maintenance mode for maintaining a vehicle state in which power is supplied to an air conditioner (7) of the vehicle (1) and a display in the vehicle (1) but not to a drivetrain of the vehicle (1) based on an instruction from a user of the vehicle (1), and a threshold setting part (35) configured to set a threshold of a parameter related to a remaining charge amount of a main battery (14) of the vehicle (1) based on input by the user. The mode setting part (34) is configured to end the state maintenance mode when the parameter falls to the threshold.

## Description

### TECHNICAL FIELD

The present invention relates to a vehicle mode control device, a vehicle mode control method, and a computer program.

### BACKGROUND ART

Patent Literature 1 discloses that when a sleeping state is detected, an air conditioner of a vehicle is controlled so as to create a suitable state for a user to sleep comfortably inside the vehicle.

### CITATION LIST

### PATENT LITERATURE

PTL 1 Japanese Unexamined Patent Publication (Kokai) No. 2023-031630

### SUMMARY

### TECHNICAL PROBLEM

Even in situations other than when sleeping inside the vehicle, there exist needs to maintain operation of the air conditioner and displays of a parked vehicle. Thus, it is desirable for a user of the vehicle to be capable of selecting a vehicle mode which maintains operation of the air conditioner and displays.

In this case, in order to avoid the vehicle running out of power due to continued use of the air conditioner or displays, ending the vehicle mode when a remaining charge amount of the battery of the vehicle becomes low has been considered. However, if such end control is executed, there is a risk that the vehicle mode will be ended contrary to the will of the user.

In light of the problem described above, an object of the present invention is to prevent a vehicle mode for maintaining the operation of the air conditioner and displays of a vehicle in a parked state from being ended contrary to the will of the vehicle user.

### SOLUTION TO PROBLEM

The summary of the present disclosure is as follows.
(1) A vehicle mode control device for controlling a mode of a vehicle, comprising: a mode setting part configured to set the mode of the vehicle to a state maintenance mode for maintaining a vehicle state in which power is supplied to an air conditioner of the vehicle and a display in the vehicle but not to a drivetrain of the vehicle based on an instruction from a user of the vehicle; and a threshold setting part configured to set a threshold of a parameter related to a remaining charge amount of a main battery of the vehicle based on input by the user, wherein the mode setting part is configured to end the state maintenance mode when the parameter falls to the threshold.
(2) The vehicle mode control device described in above (1), wherein the parameter is an SOC of the main battery.
(3) The vehicle mode control device described in above (1), wherein the parameter is a drivable distance of the vehicle.
(4) The vehicle mode control device described in any one of above (1) to (3), wherein the threshold setting part is configured to display, on the display, a parameter operation portion where the threshold is input before the state maintenance mode is started.
(5) The vehicle mode control device described in above (4), wherein the threshold setting part is configured to display, on the display, the parameter operation portion together with a start button for the state maintenance mode.
(6) The vehicle mode control device described in above (4) or (5), wherein the threshold setting part is configured to display, as an initial value of the threshold in the parameter operation portion, a value previously set as the threshold.
(7) The vehicle mode control device described in any one of above (1) to (6), wherein the threshold setting part is configured to prohibit input of a value equal to or greater than a present value of the parameter as the threshold while the state maintenance mode is being executed.
(8) The vehicle mode control device described in any one of above (1) to (7), wherein the threshold setting part is configured to calculate an estimated value of a remaining time for which the state maintenance mode can be maintained based on a present value of the parameter and the threshold, and display the estimated value on the display.
(9) The vehicle mode control device described in any one of above (1) to (8), wherein the mode setting part is configured to temporarily set the mode of the vehicle to a transition mode before turning off a power supply of the vehicle when the state maintenance mode ends, and turn off the display while supplying power to the display in the transition mode.
(10) The vehicle mode control device described in any one of above (1) to (9), wherein the threshold setting part is configured to display a present value of the parameter and the threshold on the display when the state maintenance mode is being executed.
(11) A vehicle mode control method executed by a computer, comprising: setting a mode of a vehicle to a state maintenance mode for maintaining a vehicle state in which power is supplied to an air conditioner of the vehicle and a display in the vehicle but not to a drivetrain of the vehicle based on an instruction from a user of the vehicle; setting a threshold of a parameter related to a remaining charge amount of a main battery of the vehicle based on input by the user; and ending the state maintenance mode when the parameter falls to the threshold.
(12) A computer program causing a computer to: set a mode of a vehicle to a state maintenance mode for maintaining a vehicle state in which power is supplied to an air conditioner of the vehicle and a display in the vehicle but not to a drivetrain of the vehicle based on an instruction from a user of the vehicle; set a threshold of a parameter related to a remaining charge amount of a main battery of the vehicle based on input by the user; and end the state maintenance mode when the parameter falls to the threshold.

### ADVANTAGEOUS EFFECTS OF INVENTION

According to the present invention, it is possible to prevent a vehicle mode for maintaining the operation of the air conditioner and displays of a vehicle in a parked state from being ended contrary to the will of the vehicle user.

### BRIEF DESCRIPTION OF DRAWINGS

FIG. 1 is a schematic configuration view of a connected system including a vehicle equipped with a vehicle mode control device according to the present embodiment.
FIG. 2 is a schematic configuration view of a vehicle mode control system including the vehicle mode control device according to the embodiment of the present invention.
FIG. 3 is a view schematically showing an interior of a vehicle in front of the driver's seat and passenger seat.
FIG. 4 is a view schematically showing the flow of power between electrical components of a vehicle.
FIG. 5 is a view showing the transition of power supply states in a vehicle.
FIG. 6 is a functional block diagram of a processor of an ECU.
FIG. 7 shows an example of a confirmation screen for confirming whether to end a state maintenance mode.
FIG. 8 shows an example of a confirmation screen for confirming whether to transition the power supply state.
FIG. 9 is a flowchart showing a control routine of mode start processing of a first embodiment of the present invention.
FIG. 10 is a view showing an example of a setting screen for a state maintenance mode.
FIG. 11 is a view showing an example of an execution screen for a state maintenance mode.
FIG. 12 is a view showing another example of the setting screen for the state maintenance mode.
FIG. 13 is a view showing another example of the setting screen for the state maintenance mode.
FIG. 14 is a flowchart showing a control routine of mode end processing of a second embodiment of the present invention.

### DESCRIPTION OF EMBODIMENTS

The embodiments of the present invention will be described in detail below with reference to the drawings. Note that in the following description, identical constituent elements have been assigned common reference signs.

### <First Embodiment>

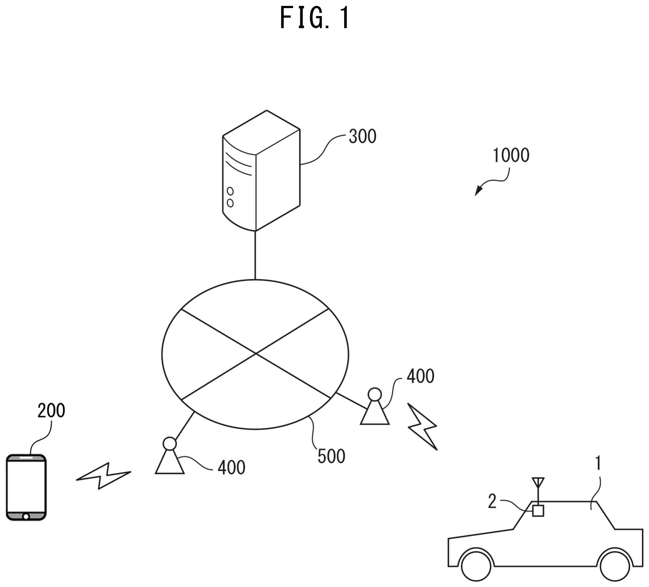

FIG. 1 is a schematic configuration view of a connected system 1000 which includes a vehicle 1 equipped with a vehicle mode control device according to the present embodiment. The connected system 1000 includes the vehicle 1, a mobile terminal 200, and a server 300. The vehicle 1 and the mobile terminal 200 communicate with the server 300 via a wireless base station 400 and a communication network 500, respectively. In the present embodiment, the vehicle 1 is a four-wheeled automobile.

The mobile terminal 200 is owned by the user of the vehicle 1 and includes, for example, at least one of a smartphone, a tablet terminal, a smart watch, and smart glasses. The mobile terminal 200 includes a processor for performing various processes on the mobile terminal 200, input equipment (touch panel, operation buttons, microphone, etc.), output equipment (display, speaker, etc.), and a communication module. The communication module of the mobile terminal 200 accesses the wireless base station 400 to connect the mobile terminal 200 to the communication network 500 via the wireless base station 400. Communication between the mobile terminal 200 and the wireless base station 400 is performed based on a known wireless communication standard (for example, 3G, LTE, 4G, 5G, 6G, etc.).

The server 300 is provided outside the vehicle 1 and includes a communication interface, storage, memory, a processor, etc. The server 300 may be composed of a plurality of computers. The server 300 is operated by, for example, the manufacturer of the vehicle 1, and is also referred to as a center.

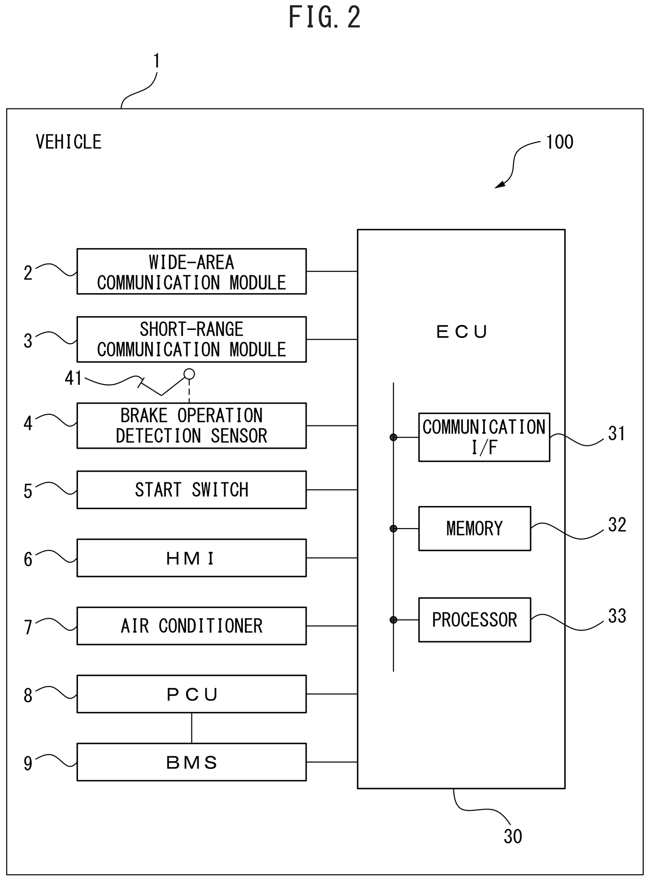

FIG. 2 is a schematic configuration view of a vehicle mode control system 100 which includes the vehicle mode control device according to an embodiment of the present invention. The vehicle mode control system 100 is mounted on the vehicle 1.

As shown in FIG. 2, the vehicle mode control system 100 includes a wide-area communication module 2, a short-range communication module 3, a brake operation detection sensor 4, a start switch 5, a human machine interface (HMI) 6, an air conditioner 7, a power control unit (PCU) 8, a battery management system (BMS) 9, and an electronic control unit (ECU) 30. The wide-area communication module 2, the short-range communication module 3, the brake operation detection sensor 4, the start switch 5, the HMI 6, the air conditioner 7, the PCU 8, and the BMS 9 are electrically connected to the ECU 30 via an in-vehicle network conforming to a standard such as a controller area network (CAN) or Ethernet.

The ECU 30 executes various controls of the vehicle 1. As shown in FIG. 2, the ECU 30 includes a communication interface 31, a memory 32, and a processor 33. The communication interface 31 and the memory 32 are connected to the processor 33 via signal lines. Though one ECU 30 is provided in the present embodiment, a plurality of ECUs may be provided for each function. The communication interface 31, the memory 32, and the processor 33 may be constituted by a single integrated circuit, or may each be constituted by a separate circuit.

The communication interface 31 includes an interface circuit for connecting the ECU 30 to the in-vehicle network. The ECU 30 is connected to other vehicle-mounted equipment via the communication interface 31. In the present embodiment, the communication interface 31 transmits signals received from the wide-area communication module 2, the short-range communication module 3, the brake operation detection sensor 4, the start switch 5, the HMI 6, the PCU 8, and the BMS 9 to the processor 33. Further, the communication interface 31 transmits signals output from the processor 33 to the wide-area communication module 2, the short-range communication module 3, the HMI 6, the air conditioner 7, the PCU 8, and the BMS 9.

The memory 32 includes, for example, volatile semiconductor memory (such as dynamic random access memory (DRAM) or static random access memory (SRAM)) and non-volatile semiconductor memory (such as read-only memory (ROM), electrically erasable programmable read-only memory (EEPROM), or flash memory). The memory 32 stores temporary data, computer programs (control programs for the ECU 30) used for various processes by the processor 33, set data for the ECU 30, log data, vehicle information, etc. The memory 32 is an example of a storage unit.

The processor 33 includes one or more central processing units (CPUs) and peripheral circuits therefor. The processor 33 executes computer programs stored in the memory 32. The processor 33 may further include other arithmetic circuits such as a logic operation unit, a numerical operation unit, or a graphics processing unit. On-board components which are connected to the ECU 30 will be described below.

The wide-area communication module 2 enables wide-area wireless communication between the vehicle 1 and external devices (for example, a server 300) of the vehicle 1. The wide-area communication module 2 accesses the wireless base station 400 to connect the vehicle 1 to the communication network 500 via the wireless base station 400. Communication between the vehicle 1 and the wireless base station 400 is based on a known wireless communication standard (for example, 3G, LTE (Long Term Evolution), 4G, 5G, 6G, etc.). The wide-area communication module 2 is, for example, a data communication module (DCM).

The short-range communication module 3 enables short-range wireless communication between the vehicle 1 and the mobile terminal 200 of the user of the vehicle 1. The short-range communication module is a wireless module which complies with short-range communication standards such as BLE (Bluetooth Low Energy) and NFC (Near Field Communication). The mobile terminal 200 can function as a digital key for the vehicle 1 by directly communicating with the vehicle 1 via the short-range communication module 3. Specifically, the user of the vehicle 1 can control the door locks of the vehicle 1 using the mobile terminal 200.

The brake operation detection sensor 4 is provided on a brake pedal 41 of the vehicle 1 and detects operation of the brake pedal 41 by the user of the vehicle 1. For example, the brake operation detection sensor 4 may be constituted by a pressure sensor for detecting the pressure applied to the brake pedal 41, an angle sensor for detecting the rotation angle or displacement of the brake pedal 41, an electric switch for generating an on/off signal in response to depression of the brake pedal 41, etc. The brake operation detection sensor 4 may be constituted by a noncontact sensor such as an optical sensor or a magnetic sensor. The output of the brake operation detection sensor 4 is transmitted to the ECU 30.

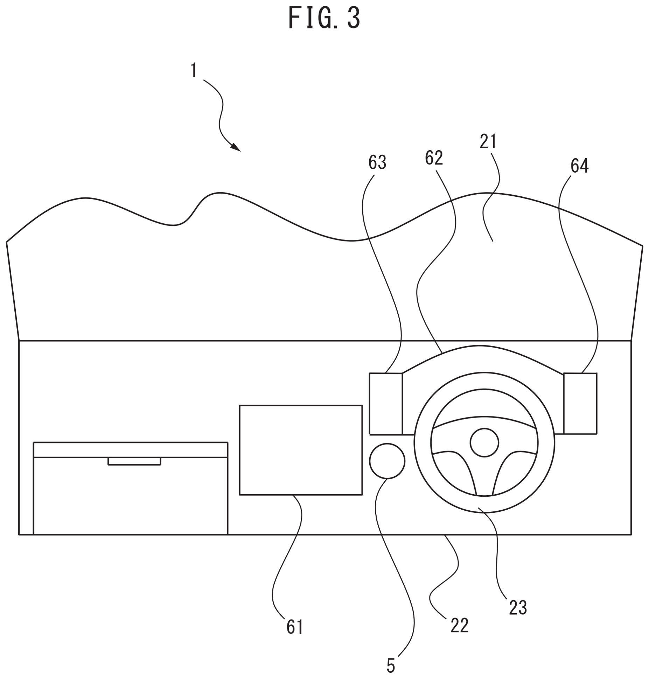

FIG. 3 is a view schematically illustrating the interior of the vehicle 1 in front of the driver's seat and passenger seat. A right-hand drive vehicle 1 is shown in FIG. 3. As shown in FIG. 3, the start switch 5 is located on a dashboard 22 below a windshield 21. For example, the start switch 5 is located near the driver's seat so as to be operable by the user (for example, the driver) of the vehicle 1, and more specifically, near a steering wheel 23 (to the left of the steering wheel 23 in the example of FIG. 3). The start switch 5 is, for example, a push-button switch. When pressed by the user of the vehicle 1, the start switch 5 outputs a signal corresponding to the pressing operation of the user. The output of the start switch 5 is transmitted to the ECU 30.

The HMI 6 is installed in the vehicle cabin and exchanges information between the vehicle 1 and the user of the vehicle 1. The HMI 6 includes input equipment for receiving input from the user of the vehicle 1 and output equipment for issuing notifications to the user of the vehicle 1. The input equipment includes, for example, at least one of a touch panel, operation buttons, operation switches, and a microphone. Information input to the input equipment of the HMI 6 by the user of the vehicle 1 is transmitted to the ECU 30. The output equipment includes at least one of a display device (for example, a display), a warning light, a speaker, a buzzer, and a vibration unit. The output equipment of the HMI 6 issues notifications to the user of the vehicle 1 regarding information corresponding to the signals transmitted from the ECU 30.

As shown in FIG. 3, in the present embodiment, the HMI 6 includes a multimedia display (hereinafter referred to as an "MM display") 61, a meter display 62, a left-side operation display 63, and a right-side operation display 64. These displays are provided inside the vehicle (specifically, near the driver's seat) so as to be visible by the user of the vehicle 1, and display various information to the user of the vehicle 1 based on the signals transmitted from the ECU 30.

In the present embodiment, the MM display 61 is incorporated into the portion of the dashboard 22 between the driver's seat and the passenger seat, i.e., the center console. In this case, the MM display 61 is also referred to as a center display. The MM display 61 is the largest display in the vehicle cabin and displays multimedia information, map information, screens for various settings of the vehicle 1, etc. The MM display 61 is constituted by a touch panel liquid crystal display (LCD: Liquid Crystal Display) or organic EL (Electro Luminescence) display operable by the user of the vehicle 1. Thus, the MM display 61 functions as input equipment and output equipment.

The meter display 62 is arranged in a position which is easily visible by the user of the vehicle 1 while driving the vehicle 1. Specifically, the meter display 62 is incorporated as an instrument panel in the dashboard 22 in front of the steering wheel 23, i.e., in front of the driver's seat. The meter display 62 displays status information of the vehicle 1, and specifically, information necessary for driving the vehicle 1, such as vehicle speed, the SOC (State of Charge) of the main battery, which will be described later, and warning lights. The meter display 62 functions as output equipment and is constituted by, for example, an LCD or an organic EL display. Note that the meter display 62 may be constituted by a touch-panel LCD or organic EL display operable by the user, and may function as both input equipment and output equipment.

The left-side operation display 63 is arranged in a position which is easily operable with the left hand of the user of the vehicle 1 while driving the vehicle 1, and the right-side operation display 64 is arranged in a position which is easily operable with the right hand of the user of the vehicle 1 while driving the vehicle 1. The left-side operation display 63 and the right-side operation display 64 are arranged on either side of the meter display 62, and are arranged in positions symmetrical with respect to a line dividing the steering wheel 23 into left and right halves.

The left-side operation display 63 is arranged adjacent to the meter display 62 on the left side of the steering wheel 23. In the present embodiment, the left-side operation display 63 displays a multimedia operation screen (for example, an audio setting screen, etc.). The left-side operation display 63 is constituted by a touch panel LCD or organic EL display operable by the user of the vehicle 1. Thus, the left-side operation display 63 functions as input equipment and output equipment.

The right-side operation display 64 is arranged adjacent to the meter display 62 on the right side of the steering wheel 23. In the present embodiment, the right-side operation display 64 displays an operation screen for a driving assistance function (for example, a setting screen for adaptive cruise control (ACC)). The right-side operation display 64 is constituted by a touch panel LCD or organic EL display operable by the user of the vehicle 1. Thus, the right-side operation display 64 functions as input equipment and output equipment.

In the present embodiment, the left-side operation display 63 is connected to the left end of the meter display 62, and the right-side operation display 64 is connected to the right end of the meter display 62. Specifically, the left-side operation display 63 and the right-side operation display 64 are formed integrally with the meter display 62. However, the left-side operation display 63 and the right-side operation display 64 may each be separate from the meter display 62.

The air conditioner 7 includes an electric compressor and provides both cooling and heating functions. When providing the cooling function, the air conditioner 7 reduces the temperature inside the vehicle cabin via a heat exchange process using a refrigerant, and when providing the heating function, the air conditioner 7 increases the temperature inside the vehicle cabin using heat pump technology.

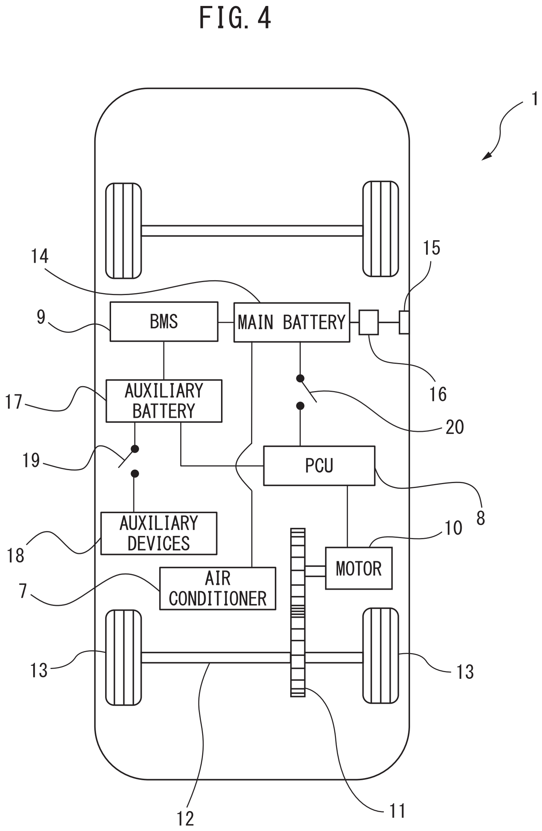

As shown in FIG. 2, the PCU 8 and the BMS 9 are electrically connected and can communicate with each other using a communication protocol such as CAN. The configurations and functions of the PCU 8 and the BMS 9 will be described with reference to FIG. 4.

FIG. 4 is a view schematically illustrating the flow of power between electrical components of the vehicle 1. As shown in FIG. 4, the vehicle 1 further includes a motor 10, a reduction gear 11, axles 12, wheels 13, a main battery 14, a charging port 15, a charger 16, an auxiliary battery 17, auxiliary devices 18, an auxiliary relay 19, and a main relay 20.

In the present embodiment, the vehicle 1 is a so-called battery electric vehicle (BEV), and only the motor 10 functions as a drive device for the vehicle 1. The motor 10 is connected to the reduction gear 11, and the output of the motor 10 is supplied to the reduction gear 11. The output of the motor 10 supplied to the reduction gear 11 is transmitted to the wheels 13 via the axles 12, and drives the wheels 13. Thus, the motor 10 can output power for running the vehicle 1.

The main battery 14 is a rechargeable secondary battery, such as a lithium-ion battery, a nickel-metal hydride battery, an all-solid-state battery, or a sodium-ion battery. The main battery 14 is a high-voltage battery for outputting high-voltage (for example, 200 V to 800 V) DC power. The main battery 14 is charged by power supplied from an external power supply, such as a home power supply or a charging station, or by regenerative power generated when the vehicle 1 decelerates. The charging port 15 is configured so as to receive power from the external power supply, and the charger 16 converts the power supplied to the charging port 15 from the external power supply into power which can be supplied to the main battery 14. The main battery 14 is also referred to as a drive battery or a high-voltage battery.

When the motor 10 outputs power for driving, the electric power stored in the main battery 14 is supplied to the motor 10 via the PCU 8. Specifically, the main battery 14 functions as a drive source for the vehicle 1. The main battery 14 is also connected to the air conditioner 7, and the electric compressor of the air conditioner 7 is operated by the high-voltage electric power supplied from the main battery 14.

The BMS 9 monitors and manages the main battery 14 and includes a sensor module, a control circuit, etc. The sensor module includes a voltage sensor for detecting the voltage of each cell of the main battery 14, a current sensor for detecting the charge/discharge current of the main battery 14, and a temperature sensor for detecting the temperature of the main battery 14. The control circuit estimates the state of the main battery 14 and controls charging and discharging. For example, the control circuit calculates the SOC (State of Charge), SOH (State of Health), and SOP (State of Power) of the main battery 14 based on the output of the sensor module.

The auxiliary battery 17 is a rechargeable secondary battery, and is constituted by, for example, a lead-acid battery or a lithium-ion battery. The auxiliary battery 17 is a low-voltage battery for outputting low-voltage (for example, 12 V) DC power. Specifically, the auxiliary battery 17 outputs power with a lower voltage than the main battery 14. The auxiliary battery 17 is charged by power supplied from the main battery 14. The auxiliary battery 17 is also referred to as a low-voltage battery.

The auxiliary battery 17 is connected to the auxiliary devices 18, and the auxiliary devices 18 operate on low-voltage power supplied from the auxiliary battery 17. The auxiliary devices 18 include communication modules such as the wide-area communication module 2 and the short-range communication module 3, sensors such as the brake operation detection sensor 4, the start switch 5, the HMI 6, lighting devices (headlights, taillights, etc.), power windows, etc.

The auxiliary relay 19 is provided between the auxiliary battery 17 and the auxiliary devices 18. Specifically, the auxiliary devices 18 are connected to the auxiliary battery 17 via the auxiliary relay 19. When the auxiliary relay 19 is closed, the auxiliary battery 17 is electrically connected to the auxiliary devices 18. As a result, power can be supplied from the auxiliary battery 17 to the auxiliary devices 18.

The PCU 8 controls the power of the vehicle 1 and includes an inverter, a DC-DC converter, a boost converter, a control circuit, etc. The inverter is connected to the main battery 14 and the motor 10, and the main battery 14 supplies power to the motor 10 via the inverter. When power is supplied from the main battery 14 to the motor 10, the inverter converts the DC power supplied from the main battery 14 into AC power. Further, the inverter controls the rotation speed and output torque of the motor 10 by adjusting the amount and frequency of the AC power supplied to the motor 10. On the other hand, when regenerative power is supplied from the motor 10 to the main battery 14, the inverter converts the AC power supplied from the motor 10 into DC power.

The DC-DC converter is connected to the main battery 14 and the auxiliary battery 17, and the main battery 14 supplies power to the auxiliary battery 17 via the DC-DC converter. When power is supplied from the main battery 14 to the auxiliary battery 17, the DC-DC converter converts high-voltage power (for example, 200 V to 800 V) into low-voltage power (for example, 12 V). The boost converter boosts the output of the main battery 14 as needed. The control circuit controls the inverter, regenerative braking, etc.

The main relay 20 is provided between the main battery 14 and the PCU 8. Specifically, the PCU 8 is connected to the main battery 14 via the main relay 20. When the main relay 20 is closed, the main battery 14 is electrically connected to the PCU 8. As a result, power can be supplied from the main battery 14 to the PCU 8. When power is supplied from the main battery 14 to the PCU 8, the DC-DC converter of the PCU 8 operates, and power can be supplied from the main battery 14 to the auxiliary battery 17 via the PCU 8. Specifically, the auxiliary battery 17 can be charged using the output power of the main battery 14.

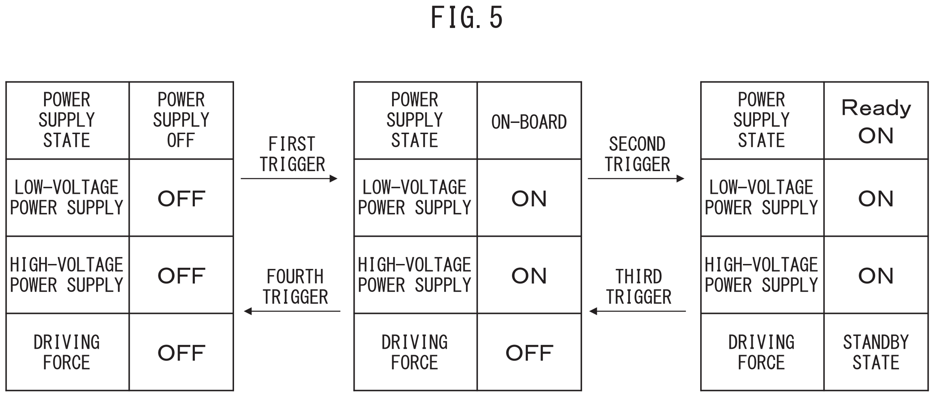

FIG. 5 is a view showing the transition of the power supply state of the vehicle 1. As shown in FIG. 5, the vehicle 1 has three states including a power supply off state, an on-board state, and ready-on state as power supply states. Note that as will be clear from the description below, the power supply state being an "on-board state" does not necessarily require that the user of vehicle 1 (hereinafter simply referred to as "the user") be present in the vehicle cabin.

When the power supply state is the power supply off state, the low-voltage power supply, the high-voltage power supply, and the driving force are all disabled. When the low-voltage power supply is off, the auxiliary relay 19 is open, disabling the power supply between the auxiliary battery 17 and the auxiliary devices 18. When the high-voltage power supply is off, the main relay 20 is open, disabling the power supply between the main battery 14 and the PCU 8. When the driving force is off, the initialization operation of the driving system by the PCU 8 (system self-diagnosis, inverter initialization, etc.) is not complete, and the power supply from the main battery 14 to the motor 10 is not started.

When a first trigger occurs while the power supply state is the power supply off state, the power supply state transitions from the power supply off state to the on-board state. In the present embodiment, the first trigger is the door of vehicle 1 being opened. Thus, when the user unlocks the door of the vehicle 1 and opens the door of the vehicle 1 to board the vehicle 1, the power supply state of the vehicle 1 transitions from the power supply off state to the on-board state.

When the power supply state is the "on-board state," the low-voltage power supply and the high-voltage power supply are turned on, and the driving force is maintained in an off state. When the low-voltage power supply is turned on, i.e., when the low-voltage power supply is enabled, the ECU 30 closes the auxiliary relay 19 using the output power of the auxiliary battery 17. As a result, power supply from the auxiliary battery 17 to the auxiliary devices 18 starts.

When the high-voltage power supply is turned on, i.e., when the high-voltage power supply is enabled, the BMS 9 executes an initialization operation including checking the state of the main battery 14, and after the initialization operation is completed, closes the main relay 20 using the output power of the auxiliary battery 17. As a result, power supply from the main battery 14 to the PCU 8 starts.

Furthermore, since the air conditioner 7 is directly connected to the main battery 14 as shown in FIG. 4, when the high-voltage power supply is turned on, power supply from the main battery 14 to the air conditioner 7 also starts. Note that when the user sets the operation state of the air conditioner 7 to off, power supply from the main battery 14 to the air conditioner 7 is stopped even if the high-voltage power supply is on.

When a second trigger occurs when the power supply state is in the on-board state, the power supply state transitions from the on-board state to the ready-on state. In the present embodiment, the second trigger is the user performing a start operation for the vehicle 1, and two options are provided as the start operation. The first option is a combined operation in which the operation of depressing the brake pedal 41 and the operation of pressing the start switch 5 are combined, and the second option is a single operation of depressing the brake pedal 41. The user selects one of the first option or the second option as the start operation for starting the vehicle 1 via the HMI 6 (for example, the MM display 61). In the present embodiment, in the vehicle 1 in an initial state (for example, the vehicle 1 at the time of shipment), the start operation is set to the first option.

When the first option is set as the start operation, when the user performs the combined operation of the first option, the power supply state transitions from the on-board state to the ready-on state. On the other hand, if the second option is set as the start operation, when the user performs the single operation of the second option, the power supply state transitions from the on-board state to the ready-on state. Note that only one operation method (for example, the first option or the second option) may be set as the start operation of the vehicle 1.

When the power supply state is the ready-on state, the low-voltage power supply and the high-voltage power supply are turned on, and the driving force is put into a standby state. Thus, in order to transition the power supply state of the vehicle 1 to the ready-on state, the PCU 8 executes initialization of the drive system and puts the driving force into a standby state. When the driving force is in a standby state, the initialization of the drive system by the PCU 8 is complete, but power supply from the main battery 14 to the motor 10 is not started. In this state, when the user depresses the brake pedal 41 and shifts the gear shifter of the vehicle 1 into drive (D) mode or reverse (R) mode, the driving force is turned on, and power supply from the main battery 14 to the motor 10 starts.

On the other hand, when the user sets the gear shifter of vehicle 1 to parking (P) mode after the vehicle 1 is running, the driving force changes from on to standby, and power supply from the main battery 14 to the motor 10 is stopped. In this state, when a third trigger occurs, the driving force changes from standby to off, and the power supply state transitions from the ready-on state to the on-board state. Specifically, when a third trigger occurs while the power supply state is the ready-on state, the power supply state transitions from the ready-on state to the on-board state. In the present embodiment, the third trigger is the user pressing the start switch 5. Thus, when the user presses the start switch 5 after setting the gear shifter of vehicle 1 to parking mode, the power supply state transitions from the ready-on state to the on-board state.

When a fourth trigger occurs while the power supply state is in the on-board state, the power supply state transitions from the on-board state to the power supply off state. In the present embodiment, the fourth trigger occurs when the door of vehicle 1 is locked from outside vehicle 1 or when vehicle 1 is in an inactive state for equal to or longer than a threshold time. Thus, when the user exits the vehicle 1 and locks the door of the vehicle 1, the power supply state transitions from the on-board state to the power supply off state. Furthermore, the power supply state transitions from the on-board state to the power supply off state in a situation in which the vehicle 1 is left unattended in a state in which the door of the vehicle 1 is unlocked, or in a situation in which the user is sleeping in the vehicle 1 while parked. Note that the threshold time when the key of the vehicle 1 is inside the vehicle 1 (for example, 30 to 80 minutes) may be different from the threshold time when the key of the vehicle 1 is outside the vehicle 1 (for example, 3 to 10 minutes).

When the power supply of the vehicle 1 is off, the user naturally cannot use the HMI 6 and the air conditioner 7 inside the vehicle. On the other hand, when the power supply state is in the on-board state, the HMI 6 and the air conditioner 7 can be used while avoiding power consumption for driving the vehicle 1. Thus, in some situations when the vehicle 1 is stopped, the user may wish to fix the power supply state to the on-board state. For example, such situations include a situation in which the user is watching desired content on the MM display 61, a situation in which the user uses the vehicle 1 as lodging, or a situation in which the user camps outside the vehicle 1. In these situations, it is desirable to keep the air conditioner 7 running to maintain a comfortable temperature inside the vehicle 1 without turning off the power supply of the vehicle 1.

Thus, in the present embodiment, there is provided a state maintenance mode as a mode of the vehicle 1 selectable by the user, in which power is supplied to the air conditioner of vehicle 1 and the display in vehicle 1, but the vehicle state is maintained such that power is not supplied to the drivetrain of vehicle 1. As a result, the user can enjoy situations such as those described above in a comfortable cabin environment, thereby improving the usability of vehicle 1.

In the present embodiment, the vehicle state in which the power supply state is set to the on-board state corresponds to a vehicle state in which power is supplied to the air conditioner of vehicle 1 and the displays in vehicle 1, but not to the drivetrain of vehicle 1. Specifically, in the state maintenance mode, the power supply state is fixed to the on-board state, and even if the fourth trigger occurs, the power supply state does not transition from the on-board state to the power supply off state. In other words, in the state maintenance mode, the transition of the power supply state from the on-board state to the power supply off state is disabled. Note that the displays of the HMI 6 (the MM display 61, the meter display 62, the left-side operation display 63, and the right-side operation display 64 in the present embodiment) are examples of displays in vehicle 1.

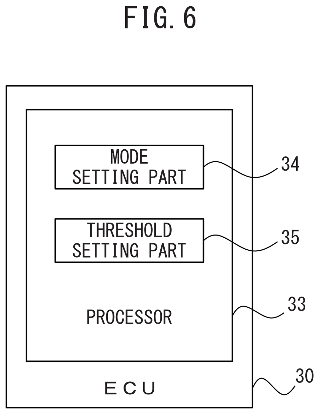

In the present embodiment, the ECU 30 functions as a vehicle mode control device for controlling the mode of the vehicle 1. FIG. 6 is a functional block diagram of the processor 33 of the ECU 30. As shown in FIG. 6, the processor 33 includes a mode setting part 34 and a threshold setting part 35. The mode setting part 34 and the threshold setting part 35 are functional modules realized by the processor 33 of the ECU 30 executing computer programs stored in the memory 32 of the ECU 30. Note that these functional modules may each be realized by a dedicated arithmetic circuit provided in the processor 33. The ECU 30 is an example of a vehicle mode control device.

The mode setting part 34 sets the mode of the vehicle 1. In particular, in the present embodiment, the mode setting part 34 sets the mode of the vehicle 1 to the state maintenance mode for maintaining the vehicle state in which the power supply state of the vehicle 1 is set to the on board state, based on instructions from the user. For example, the user instructs the mode of the vehicle 1 via the HMI 6. The mode setting part 34 sets the mode of the vehicle 1 to the state maintenance mode when the user requests the start of the state maintenance mode.

On the other hand, the mode setting part 34 ends the state maintenance mode when a predetermined condition is established in the state maintenance mode. In the present embodiment, the predetermined condition includes the following first to fifth end conditions, and the mode setting part 34 ends the state maintenance mode when any one of the first to fifth end conditions is established.

The first end condition is that a parameter related to the remaining charge amount of the main battery 14 has fallen to a predetermined threshold. In the present embodiment, the parameter related to the remaining charge amount of the main battery 14 is the SOC of the main battery 14. In this case, the mode setting part 34 ends the state maintenance mode when the SOC of the main battery 14 calculated by the BMS 9 falls to a predetermined threshold. By setting the first end condition as the end condition of the state maintenance mode, the vehicle 1 can be prevented from running out of power due to continued implementation of the state maintenance mode.

The second end condition is that an abnormality is detected in the vehicle 1. In this case, the mode setting part 34 ends the state maintenance mode when an abnormality is detected in the vehicle 1. Abnormalities in the vehicle 1 include, for example, abnormalities detected by self-diagnosis of the vehicle 1, communication disruptions, etc. By setting the second end condition as the end condition of the state maintenance mode, the state maintenance mode can be prevented from continuing even when the vehicle 1 is in an abnormal state.

The third end condition is that the user requests to end the state maintenance mode via the HMI 6. In this case, the mode setting part 34 ends the state maintenance mode when the user requests to end the state maintenance mode via the HMI 6. For example, the user requests to end the state maintenance mode by operating the MM display 61 of the HMI 6 (for example, by selecting an end button displayed on the MM display 61). Alternatively, the third end condition may be that the user requests to end the state maintenance mode via the mobile terminal 200. In this case, a notification of the end request is transmitted from the mobile terminal 200 to the vehicle 1 via the server 300.

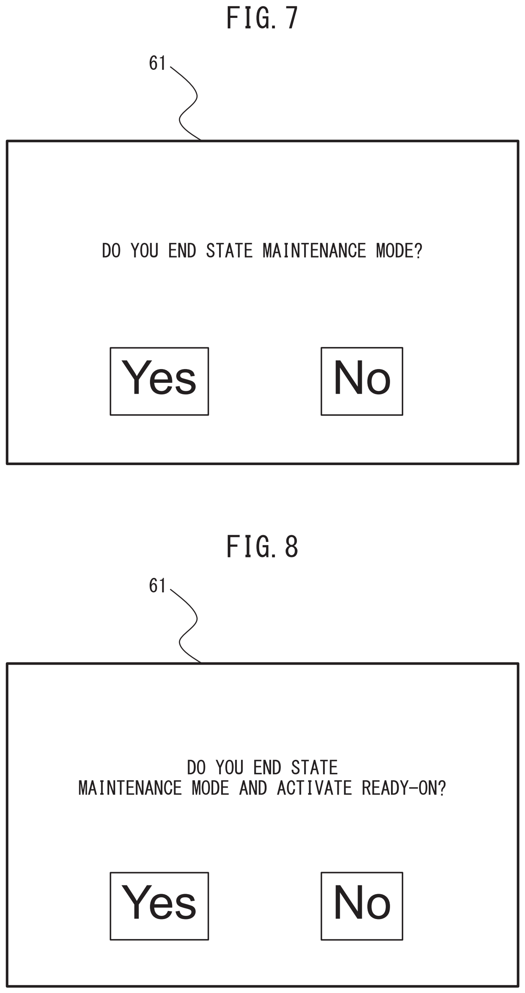

The fourth end condition is that the user presses the start switch 5. In this case, the mode setting part 34 ends the state maintenance mode when the user presses the start switch 5. Note that in order to avoid the user unintentionally ending the mode due to an erroneous operation of the start switch 5, the fourth end condition may be that the user presses the start switch 5 and approves the end of the state maintenance mode. In this case, the user approves the end of the state maintenance mode via the HMI 6. As a specific example, when the start switch 5 is pressed, the mode setting part 34 displays a confirmation screen on the HMI 6 (for example, the MM display 61) to confirm whether to end the state maintenance mode, and the user selects whether to end the state maintenance mode via the HMI 6. FIG. 7 shows an example of the confirmation screen for confirming whether to end the state maintenance mode.

The fifth end condition is that the user performs a start operation for the vehicle 1. In this case, the mode setting part 34 ends the state maintenance mode when the user performs a start operation. When the first option is set as the start operation, the user both depresses the brake pedal 41 and presses the start switch 5, and when the second option is set as the start operation, the user only depresses the brake pedal 41.

When the second option is set as the start operation, the fifth end condition may be that the user depresses the brake pedal 41 and approves the transition of the power supply state, in order to prevent the user from unintentionally ending the mode due to an erroneous operation of the brake pedal 41. In this case, the user approves the transition of the power supply state from the on-board state to the ready-on state via the HMI 6. As a specific example, when the brake pedal 41 is depressed, the mode setting part 34 displays a confirmation screen on the HMI 6 (for example, the MM display 61) to confirm whether to transition the power supply state, and the user selects whether to transition the power supply state via the HMI 6. FIG. 8 shows an example of the confirmation screen for confirming whether to transition the power supply state.

As described above, the first end condition is established when a parameter related to the remaining charge amount of the main battery 14 (in the present embodiment, the SOC of the main battery 14) falls to a predetermined threshold. Specifically, the mode setting part 34 ends the state maintenance mode when the parameter related to the remaining charge amount of the main battery 14 falls to the threshold. However, if the threshold is set to a predetermined fixed value, there is a risk that the state maintenance mode will end contrary to the will of the user.

Thus, in the present embodiment, the threshold setting part 35 sets the threshold of the parameter related to the remaining charge amount of the main battery 14 based on input by the user. Specifically, the threshold setting part 35 sets the threshold of the parameter to a value input by the user. As a result, the state maintenance mode can be prevented from ending contrary to the will of the user. For example, the threshold setting part 35 sets the threshold of the parameter based on input by the user to the HMI 6.

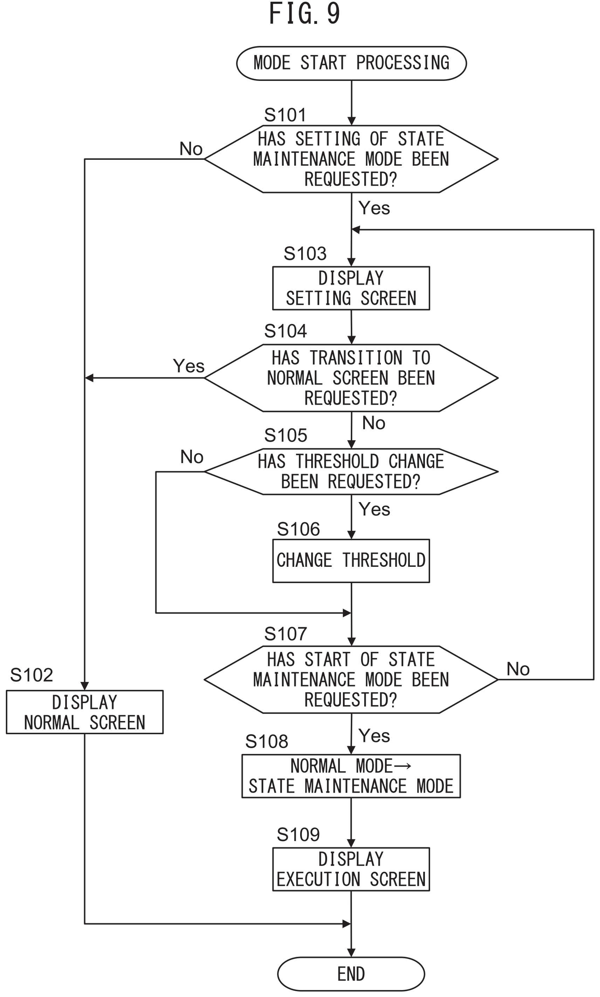

The processing flow when executing the control for starting the state maintenance mode will be described below with reference to FIG. 9. FIG. 9 is a flowchart showing the control routine of the mode start processing of the first embodiment of the present invention. The present control routine is repeatedly executed by the processor 33 of the ECU 30 in accordance with a computer program stored in the memory 32 of the ECU 30.

Initially, in step S101, the threshold setting part 35 of the processor 33 judges whether the user has requested setting of the state maintenance mode. For example, when a normal screen displaying various information regarding the vehicle 1 is displayed on the HMI 6 (for example, the MM display 61), the threshold setting part 35 judges that the user has requested setting of the state maintenance mode when an item of the state maintenance mode on the normal screen is selected by the user.

When it is judged in step S101 that setting of the state maintenance mode has not been requested, the present control routine proceeds to step S102. In this case, the display of the HMI 6 is maintained, and in step S102, the threshold setting part 35 displays the normal screen on the HMI 6. After step S102, the present control routine ends.

On the other hand, when it is judged in step S101 that setting of the state maintenance mode has been requested, the present control routine proceeds to step S103. In step S103, the threshold setting part 35 displays a setting screen for the state maintenance mode on the HMI 6 (for example, the MM display 61).

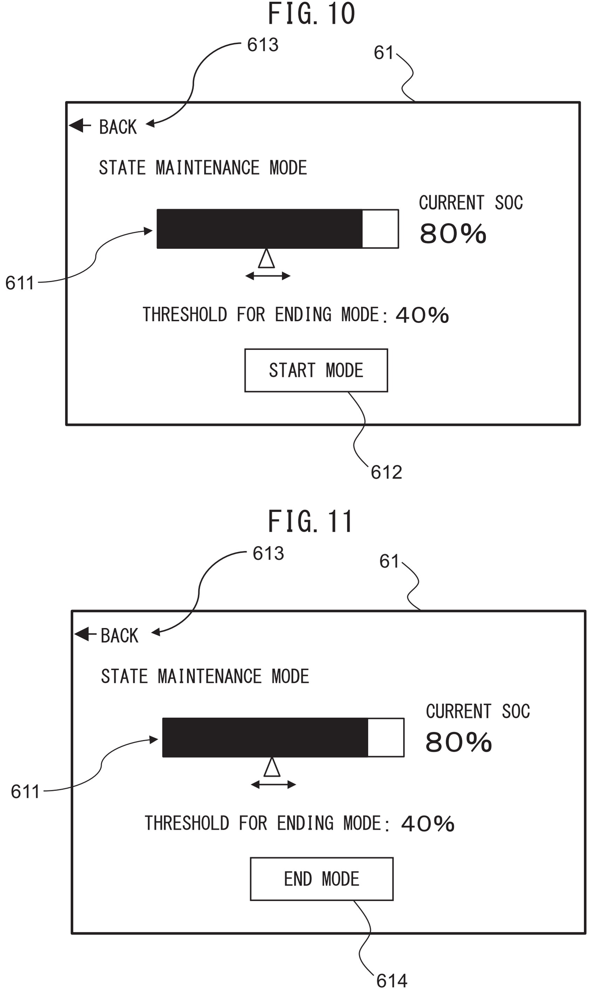

FIG. 10 is a view showing an example of the setting screen for the state maintenance mode. In the example of FIG. 10, the setting screen for the state maintenance mode includes a parameter operation portion 611 where a threshold is input, a start button 612 for starting the state maintenance mode, and a back button 613 for returning to the normal screen.

The parameter operation portion 611 includes a display of the present value and the threshold of the parameter (the SOC of the main battery 14 in the present embodiment), and is in the form of, for example, a slide bar. In this case, the user inputs the threshold to the HMI 6 by changing the position of the threshold on the slide bar in the parameter operation portion 611. In the present embodiment, the threshold setting part 35 displays the value previously set as the threshold as the initial value of the threshold in the parameter operation portion 611. This can save a user who does not wish to change the threshold from the previously set value the trouble of resetting the threshold.

Furthermore, in the present embodiment, the threshold setting part 35 displays the parameter operation portion 611 on the HMI 6 before the state maintenance mode is started. As a result, the state maintenance mode can be prevented from being started in a state in which the threshold is set to a value not intended by the user (for example, the initial value of the threshold). In particular, in the present embodiment, as shown in FIG. 10, the threshold setting part 35 displays the parameter operation portion 611 on the HMI 6 together with the start button 612 for the state maintenance mode. As a result, the user can easily set the threshold when attempting to start the state maintenance mode.

After step S103, in step S104, the threshold setting part 35 judges whether a transition to the normal screen has been requested by the user. For example, the threshold setting part 35 judges that a transition to the normal screen has been requested when the back button 613 has been selected by the user. When it is judged that a transition to the normal screen has not been requested, the present control routine proceeds to step S105.

In step S105, the threshold setting part 35 judges whether a change in threshold has been requested by the user. For example, when an operation to change the threshold is input to the HMI 6, for example, when the position of the threshold on the slide bar is changed in the parameter operation portion 611 of the setting screen in the state maintenance mode, the threshold setting part 35 judges that a change in threshold has been requested. When it is judged that a change in threshold has been requested, the present control routine proceeds to step S106.

In step S106, the threshold setting part 35 changes the threshold in response to the input from the user. When the user inputs a threshold value equal to or greater than the present value of the parameter, the threshold setting part 35 prohibits the start of state maintenance mode. In this case, for example, the threshold setting part 35 prohibits the start of state maintenance mode by graying out the start button 612 on the setting screen. Note that the threshold setting part 35 may prohibit the start of state maintenance mode by hiding the start button 612.

After step S106, the present control routine proceeds to step S107. On the other hand, when it is judged in step S105 that a change in threshold has not been requested, the present control routine skips step S106 and proceeds to step S107.

In step S107, the mode setting part 34 of the processor 33 judges whether the start of state maintenance mode has been requested by the user. For example, the mode setting part 34 judges that the start of state maintenance mode has been requested when the user selects the start button 612 on the setting screen. When it is determined that the start of state maintenance mode has not been requested, the present control routine returns to step S103. On the other hand, when it is determined that the start of state maintenance mode has been requested, the present control routine proceeds to step S108.

In step S108, the mode setting part 34 executes the state maintenance mode and changes the mode of the vehicle 1 from the normal mode to the state maintenance mode. In the normal mode, the power supply state of the vehicle 1 is set in accordance with the transition of the power supply state described above with reference to FIG. 5. For example, when the fourth trigger occurs when the power supply state is in the on-board state, the power supply state transitions from the on-board state to the power supply off state. On the other hand, in the state maintenance mode, the power supply state does not transition from the on-board state to the power supply off state even if the fourth trigger occurs.

Next, in step S109, the threshold setting part 35 displays the execution screen for the state maintenance mode on the HMI 6. Specifically, the threshold setting part 35 changes the screen displayed on the HMI 6 from the setting screen for the state maintenance mode to the execution screen for the state maintenance mode. The threshold setting part 35 displays the setting screen for the state maintenance mode on the HMI 6 before the state maintenance mode is started, and displays the execution screen for the state maintenance mode on the HMI 6 when the state maintenance mode is being executed.

FIG. 11 is a view showing an example of the execution screen for the state maintenance mode. In the example of FIG. 11, the execution screen for the state maintenance mode includes the parameter operation portion 611 where a threshold is input, an exit button 614 for ending the state maintenance mode, and a back button 613 for returning to the normal screen.

As described above, the parameter operation portion 611 includes the display of the present value and threshold of the parameter. Thus, when the state maintenance mode is executed, the threshold setting part 35 displays the present value and threshold of the parameter on the HMI 6. As a result, the user can predict how long the state maintenance mode can continue.

Furthermore, in the present embodiment, the threshold setting part 35 prohibits input of a threshold value equal to or greater than the present value of the parameter while the state maintenance mode is being executed. As a result, the state maintenance mode can be prevented from immediately ending due to an erroneous operation by the user. For example, when an operation is performed on the parameter operation portion 611 of the execution screen to change the threshold to a value equal to or greater than the present value, the threshold setting part 35 disables the operation. At this time, the threshold setting part 35 may issue a warning to the user via the HMI 6.

When the back button 613 is selected on the execution screen of the state maintenance mode, the mode setting part 34 changes the display of the HMI 6 from the execution screen of the state maintenance mode to the normal screen. When the mode setting part 34 causes the HMI 6 to display the normal screen while the state maintenance mode is being executed, the mode setting part 34 may display an icon indicating that the state maintenance mode is being executed on the normal screen of the HMI 6. As a result, the user can easily recognize that the state maintenance mode is being executed, even if the user is performing an operation on the normal screen. After step S109, the present control routine ends.

Furthermore, when it is judged in step S104 that a transition to the normal screen has been requested, the present control routine proceeds to step S102. In step S102, the threshold setting part 35 changes the display of the HMI 6 from the setting screen of the state maintenance mode to the normal screen, and displays the normal screen on the HMI 6. After step S102, the present control routine ends.

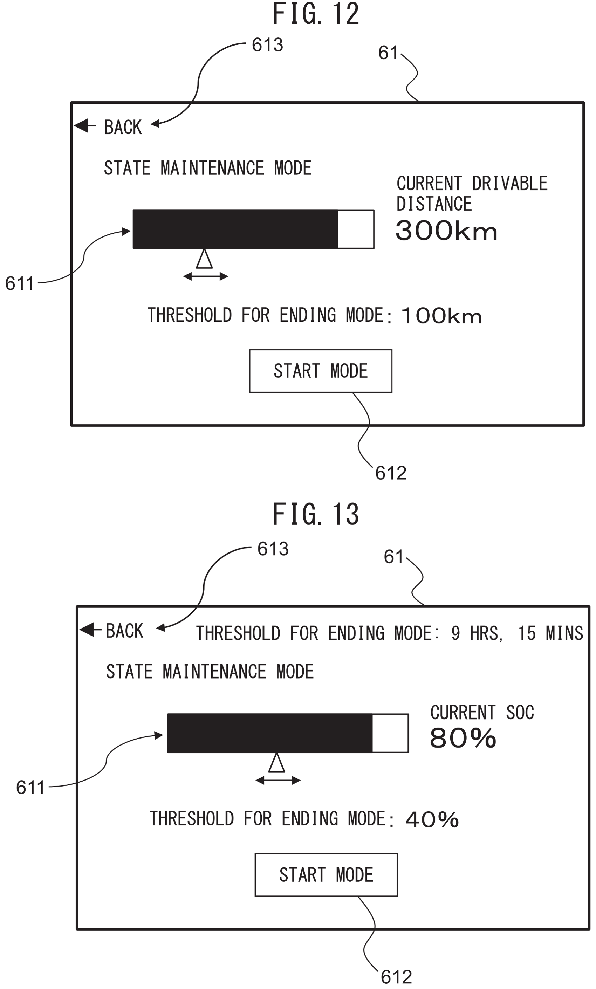

The parameter related to the remaining charge amount of the main battery 14 may be the drivable distance of the vehicle 1. In this case, the present value of the parameter, i.e., the present value of the drivable distance of the vehicle 1, is calculated based on, for example, the SOC of the main battery 14 calculated by the BMS 9 and the power consumption of the vehicle 1 calculated from the driving history of the vehicle 1. FIG. 12 shows an example of a setting screen for the state maintenance mode when the parameter is the drivable distance of the vehicle 1. In the present modification example, the execution screen for the state maintenance mode in FIG. 11 is also likewise changed.

The threshold setting part 35 may display an estimated value of the remaining time for which state maintenance mode can be maintained on the HMI 6. As a result, the user can set the threshold in consideration of the remaining time. For example, the threshold setting part 35 calculates the estimated value of the remaining time for which state maintenance mode can be maintained based on the present value of the parameter and the threshold of the parameter. At this time, the current power consumption of the vehicle 1, the average power consumption in past state maintenance modes, a predetermined fixed value, or the like is used as the power consumption of the vehicle 1 in the state maintenance mode. FIG. 13 shows an example of a setting screen for the state maintenance mode indicating the remaining time for which state maintenance mode can be maintained. Note that in the present modification example, the execution screen for state maintenance mode of FIG. 11 and the setting screen for state maintenance mode of FIG. 12 are also likewise changed.

### <Second Embodiment>

The configuration and control of the vehicle mode control device according to the second embodiment are basically the same as the configuration and control of the vehicle mode control device according to the first embodiment, except for the points described below. Thus, the second embodiment of the present invention will be described below, focusing on the differences from the first embodiment.

As described above, the first end condition is established by the SOC of the main battery 14 falling, and the second end condition is established by an abnormality in the vehicle 1. Specifically, the first end condition and the second end condition are established by factors other than an end operation by the user. When the first end condition is established, it is desirable to turn off the power supply of the vehicle 1 after the state maintenance mode ends in order to avoid a further drop in the SOC of the main battery 14. Furthermore, when the second end condition is established, it is desirable to turn off the power supply of the vehicle 1 after the state maintenance mode ends in order to avoid leaving the abnormal state.

When the power supply state is transitioned from the on-board state to the power supply off state, from the viewpoint of protecting the power system, it is desirable to maintain the on-board state for several minutes before turning off the power supply of the vehicle 1. However, if the displays of the vehicle 1 remain on even after the first end condition or the second end condition is established and the state maintenance mode ends, the user may feel uncomfortable.

Thus, in the second embodiment, when the state maintenance mode ends due to the establishment of the first end condition or the second end condition, the mode setting part 34 temporarily sets the mode of the vehicle 1 to the transition mode before turning off the power supply of the vehicle 1, and in the transition mode, turns off the display in the vehicle 1 while supplying power to the display. As a result, the user can be prevented from feeling uncomfortable regarding the state of the vehicle 1 after the end of the state maintenance mode.

In the transition mode, the state in which the power supply state is set to the "on-board state" is maintained in the vehicle 1. The mode setting part 34 realizes a state in which the display is turned off while power is supplied to the display, for example, by setting the brightness of the backlight of the display in the vehicle 1 (the display of the HMI 6 in the present embodiment) to minimum or zero.

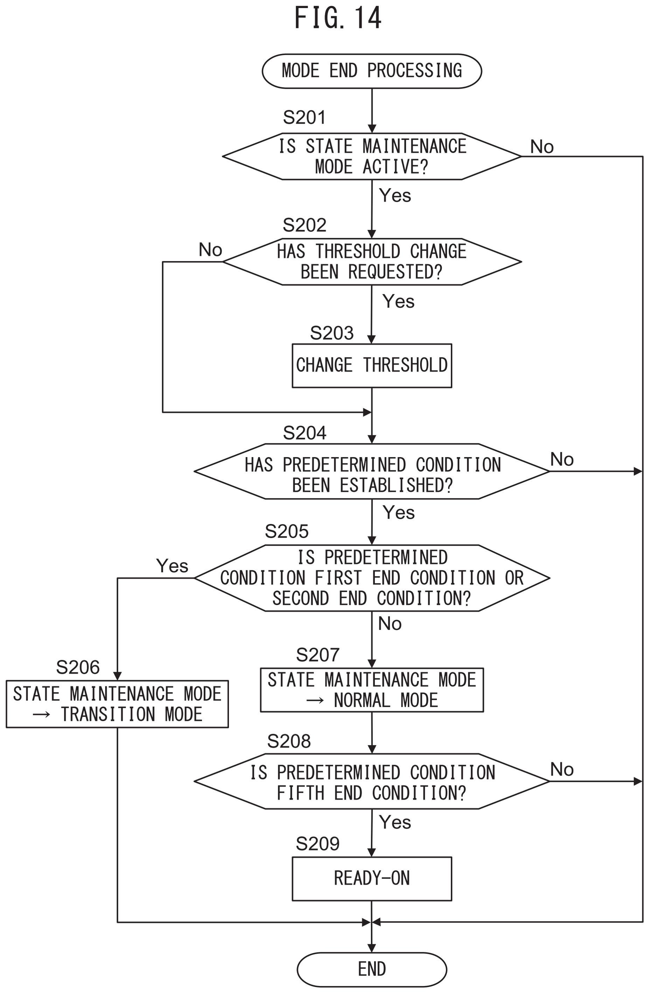

The processing flow when executing control to end the state maintenance mode will be described below with reference to FIG. 14. FIG. 14 is a flowchart showing the control routine of mode end processing of the second embodiment of the present invention. The present control routine is repeatedly executed by the processor 33 of the ECU 30 in accordance with a computer program stored in the memory 32 of the ECU 30.

First, in step S201, the mode setting part 34 of the processor 33 judges whether the mode of vehicle 1 is set to the state maintenance mode. When it is judged that the mode of vehicle 1 is not set to the state maintenance mode, the present control routine ends. On the other hand, when it is judged that the mode of vehicle 1 is set to the state maintenance mode, the present control routine proceeds to step S202.

In step S202, the threshold setting part 35 of the processor 33 judges whether a change in threshold has been requested by the user. For example, when an operation to change the threshold is input to the HMI 6, for example, when the position of the threshold on the slide bar is changed in the parameter operation portion 611 of the execution screen in the state maintenance mode, the threshold setting part 35 judges that a change in threshold has been requested. When it is determined that a change in threshold has been requested, the present control routine proceeds to step S203.

In step S203, the threshold setting part 35 changes the threshold in response to input from the user. If the user sets the threshold to a value equal to or higher than the present value of the SOC, the operation is invalidated.

After step S203, the present control routine proceeds to step S204. On the other hand, when it is judged in step S202 that a change in threshold is not requested, the present control routine skips step S203 and proceeds to step S204.

In step S204, the mode setting part 34 judges whether the predetermined condition has been established. In the present embodiment, the mode setting part 34 judges whether any one of the first to fifth end conditions has been established. When it is judged that none of the first to fifth end conditions have been established, the present control routine ends. On the other hand, when it is judged that any one of the first to fifth end conditions has been established, the present control routine proceeds to step S205.

In step S205, the mode setting part 34 judges whether the predetermined condition is the first end condition or the second end condition. When it is judged that the predetermined condition is the first end condition or the second end condition, i.e., when the first end condition or the second end condition has been established, the present control routine proceeds to step S206.

In step S206, the mode setting part 34 ends the state maintenance mode and changes the mode of the vehicle 1 from the state maintenance mode to the transition mode. The mode setting part 34 maintains the transition mode for a predetermined time (for example, 3 to 5 minutes), and turns off the power supply of the vehicle 1 after the transition mode ends. In the transition mode, the mode setting part 34 turns off the displays of the vehicle 1 while supplying power to the displays. After step S206, the present control routine ends.

On the other hand, when it is judged in step S205 that the predetermined condition is neither the first end condition nor the second end condition, i.e., when the third end condition, the fourth end condition, or the fifth end condition has been established, the present control routine proceeds to step S207.

In step S207, the mode setting part 34 ends the state maintenance mode and changes the mode of the vehicle 1 from the state maintenance mode to the normal mode. In the normal mode, the power supply state of the vehicle 1 is set in accordance with the transition of the power supply state described above with reference to FIG. 5. For example, when the fourth trigger occurs when the power supply state is in the on-board state, the power supply state transitions from the on-board state to the power supply off state.

Next, in step S208, the mode setting part 34 judges whether the predetermined condition is the fifth end condition. When it is judged that the predetermined condition is the fifth end condition, i.e., when the fifth end condition is established, the present control routine proceeds to step S209.

In step S209, since the start operation was performed as an operation to end the state maintenance mode, the mode setting part 34 changes the power supply state from the on-board state to the ready-on state. After step S209, the present control routine ends.

On the other hand, when it is judged in step S208 that the predetermined condition is not the fifth end condition, i.e., when it is judged that the state maintenance mode has ended by the establishment of the third end condition or the fourth end condition, the present control routine ends.

### <Other Embodiments>

Though the preferred embodiments of the present invention have been described above, the present invention is not limited to these embodiments, and various modifications and changes can be made within the scope of the claims. For example, the air conditioner 7 may be included in the auxiliary devices 18 and may be supplied with power from the auxiliary battery 17.

Furthermore, the vehicle 1 may be a plug-in hybrid electric vehicle (PHEV) including a motor and an engine as drive devices. Also, the vehicle may be an autonomous vehicle in which at least a part of acceleration, braking, and steering of the vehicle 1 are automatically executed.

Furthermore, though explanation is given on the assumption that a screen relating to the state maintenance mode is displayed on the MM display 61 in the vehicle 1 in the embodiments described above, such a screen may be displayed on another display (for example, the meter display 62, the left-side operation display 63, the right-side operation display 64, or an unillustrated heads-up display (HUD)) of the vehicle 1. Furthermore, at least one of the left-side operation display 63 and the right-side operation display 64 may be omitted from the vehicle 1.

Furthermore, other conditions may be used for the first to fourth triggers for transitioning the power supply state of the vehicle 1. For example, the first trigger for transitioning the power supply state of the vehicle 1 from the power supply off state to the on-board state may be the pressing of the start switch 5, etc. Furthermore, at least one of the second to fifth end conditions may be omitted.

Furthermore, the threshold setting part 35 may set the threshold of the parameter based on a user input to the mobile terminal 200. In this case, the setting screen or execution screen for the state maintenance mode is displayed on the mobile terminal 200, and the user inputs an operation to change the threshold on the setting screen or execution screen of the mobile terminal 200. In this case, the threshold setting part 35 communicates with the mobile terminal 200 via the server 300 using the wide-area communication module 2. The threshold setting part 35 may communicate directly with the mobile terminal 200 using the short-range communication module 3.

Furthermore, the server 300 or the like provided outside the vehicle 1 may function as the vehicle mode control device. In this case, necessary information is transmitted from the vehicle 1 to the server 300, and the ECU 30 of the vehicle 1 performs vehicle control related to the mode setting of the vehicle 1 in response to instructions from the server 300.

The computer program that causes a computer to realize the functions of each part of the processor 33 of the ECU 30 or the processor of the server may be provided in a form stored in a computer-readable recording medium or in a form included in a computer program product. The computer-readable recording medium is, for example, a magnetic recording medium, an optical recording medium, or a semiconductor memory.

### REFERENCE SIGNS LIST

- 1: vehicle
- 6: HMI
- 7: air conditioner
- 14: main battery
- 30: electronic control unit (ECU)
- 33: processor
- 34: mode setting part
- 35: threshold setting part

## Claims

1. A vehicle mode control device for controlling a mode of a vehicle (1), comprising:
a mode setting part (34) configured to set the mode of the vehicle (1) to a state maintenance mode for maintaining a vehicle state in which power is supplied to an air conditioner (7) of the vehicle (1) and a display in the vehicle (1) but not to a drivetrain of the vehicle (1) based on an instruction from a user of the vehicle (1); and
a threshold setting part (35) configured to set a threshold of a parameter related to a remaining charge amount of a main battery (14) of the vehicle (1) based on input by the user, wherein
the mode setting part (34) is configured to end the state maintenance mode when the parameter falls to the threshold.

2. The vehicle mode control device according to claim 1, wherein the parameter is an SOC of the main battery (14).

3. The vehicle mode control device according to claim 1, wherein the parameter is a drivable distance of the vehicle (1).

4. The vehicle mode control device according to any one of claims 1 to 3, wherein the threshold setting part (35) is configured to display, on the display, a parameter operation portion where the threshold is input before the state maintenance mode is started.

5. The vehicle mode control device according to claim 4, wherein the threshold setting part (35) is configured to display, on the display, the parameter operation portion together with a start button for the state maintenance mode.

6. The vehicle mode control device according to claim 4 or 5, wherein the threshold setting part (35) is configured to display, as an initial value of the threshold in the parameter operation portion, a value previously set as the threshold.

7. The vehicle mode control device according to any one of claims 1 to 6, wherein the threshold setting part (35) is configured to prohibit input of a value equal to or greater than a present value of the parameter as the threshold while the state maintenance mode is being executed.

8. The vehicle mode control device according to any one of claims 1 to 7, wherein the threshold setting part (35) is configured to calculate an estimated value of a remaining time for which the state maintenance mode can be maintained based on a present value of the parameter and the threshold, and display the estimated value on the display.

9. The vehicle mode control device according to any one of claims 1 to 8, wherein the mode setting part (34) is configured to temporarily set the mode of the vehicle (1) to a transition mode before turning off a power supply of the vehicle (1) when the state maintenance mode ends, and turn off the display while supplying power to the display in the transition mode.

10. The vehicle mode control device according to any one of claims 1 to 9, wherein the threshold setting part (35) is configured to display a present value of the parameter and the threshold on the display when the state maintenance mode is being executed.

11. A vehicle mode control method executed by a computer, comprising:
setting a mode of a vehicle (1) to a state maintenance mode for maintaining a vehicle state in which power is supplied to an air conditioner (7) of the vehicle (1) and a display in the vehicle (1) but not to a drivetrain of the vehicle (1) based on an instruction from a user of the vehicle (1);
setting a threshold of a parameter related to a remaining charge amount of a main battery (14) of the vehicle (1) based on input by the user; and
ending the state maintenance mode when the parameter falls to the threshold.

12. A computer program causing a computer to:
set a mode of a vehicle (1) to a state maintenance mode for maintaining a vehicle state in which power is supplied to an air conditioner (7) of the vehicle (1) and a display in the vehicle (1) but not to a drivetrain of the vehicle (1) based on an instruction from a user of the vehicle (1);
set a threshold of a parameter related to a remaining charge amount of a main battery (14) of the vehicle (1) based on input by the user; and
end the state maintenance mode when the parameter falls to the threshold.
